# FASCICULE DE BREVET EUROPEEN

(11) **EP 2 086 309 B1**
(45) Date de publication et mention de la délivrance du brevet: **08.12.2010**
(21) Numéro de dépôt: 07858570.0
(22) Date de dépôt: 15.10.2007
(51) Int. Cl.: A01G 9/14

(54) **ECRAN D'ISOLATION THERMIQUE, NOTAMMENT POUR SERRES HORTICOLES ET MARAÎCHÈRES**
WÄRMEISOLATIONSSCHIRM, SPEZIELL FÜR GARTEN- UND KOMMERZIELLE GEWÄCHSHÄUSER
THERMAL INSULATION SCREEN, ESPECIALLY FOR HORTICULTURAL AND MARKET GARDENING GREENHOUSES

(30) Priorité: 26.10.2006 FR 0654538
(43) Date de publication de la demande: 12.08.2009
(73) Titulaire: MDB Texinov SA, 38110 Saint Didier De La Tour (FR)
(72) Inventeur: DUCOL, Jean-Paul, 69007 Lyon (FR); TANKERE, Jacques, 01800 Meximieux (FR)
(74) Mandataire: Vuillermoz, Bruno
(86) Numéro de dépôt international: PCT/FR2007/052143
(87) Numéro de publication internationale: WO 2008/050029

(56) Documents cités:
- DE-A1- 3 917 508
- FR-A- 1 335 470
- FR-A- 1 478 617

## Description

### DOMAINE DE L'INVENTION

L'invention concerne plus particulièrement le domaine des cultures maraîchères et horticoles. Plus spécifiquement, elle vise un écran d'isolation thermique, du type de ceux traditionnellement mis en place au niveau des serres, et destinés à permettre la protection du contenu desdites serres contre le froid, et donc des cultures, contre les déperditions thermiques, cette protection étant également susceptible de se doubler d'une protection contre la lumière ou contre les rayons solaires.

### ETAT ANTERIEUR DE LA TECHNIQUE

Traditionnellement, les écrans d'isolation mis en place au niveau des serres sont constitués d'un film plastique, de structure plus ou moins complexe. Si un tel film assure certes la fonction première qui lui est dévolue, à savoir l'isolation thermique propre à éviter de trop importantes déperditions de chaleur, en revanche ils sont le plus souvent imperméables à l'eau et à la vapeur d'eau. Or, en raison de variations thermiques intervenant au sein du volume défini par la serre en suite de l'amplitude thermique née de la succession du jour et de la nuit, des phénomènes de condensation sont observées, susceptibles, en l'absence de l'évacuation de la vapeur d'eau ainsi produite, d'affecter les cultures destinées à être protégées par lesdites serres.

Afin de pallier cet inconvénient, on a proposé de mettre en oeuvre des films plastiques micro perforés. Cependant, en raison du caractère hydrophobe de la matière plastique qui les constitue, outre de leur caractère non absorbant, de tels films micro perforés engendrent également des phénomènes de condensation, qui s'avèrent limitatifs pour des applications de régulation thermique et/ou d'ombrage. Ces micros trous permettent l'évacuation d'un excès de pression d'air, mais ne permettent pas l'évacuation suffisante de l'humidité qui se condense et peut ainsi retomber sur les cultures provoquant des dégâts aux cultures

On a également proposé de mettre en oeuvre des écrans de type textile ou textilo-plastique assurant notamment des fonctions de régulation climatique et d'optimisation énergétique. De tels écrans sont traditionnellement positionnés à l'intérieur des serres. Au surplus, on a suggéré d'intégré dans de tels écrans des bandelettes d'aluminium, insérées par alternance avec des bandelettes transparentes, permettant d'assurer simultanément une certaine réflexion des rayons solaires tout en permettant une certaine transparence.

De tels écrans sont obtenus par tissage, tel que par exemple décrit dans le document EP 0 089422. D'autres écrans sont fabriqués par tricotage.

Cependant, de tels écrans s'avèrent d'un coût de revient relativement élevé, incompatible avec un certain nombre d'applications à faible valeur ajoutée, telles que notamment les cultures maraîchères.

Afin de réduire les coûts, on a également proposé des écrans du type précédent, remplissant la seule fonction d'isolation thermique à l'exclusion des fonctions de réflexion ou d'ombrage, donc dépourvus de bandelettes métalliques, notamment aluminium. Ils restent cependant réalisés par tissage ou tricotage.

L'invention vise à proposer un écran d'isolation thermique à la fois simple à réaliser et d'un coût de fabrication réduit.

### EXPOSE DE L'INVENTION

Cet écran d'isolation conforme à l'invention est constitué d'une structure textile intégrant un film réalisé en matière plastique, ledit film étant renforcé au moyen de fils textiles de renfort, solidarisés audit film plastique au moyen d'un fil de liage multibrins venant mailler lesdits fils de renfort par tricotage de part et d'autre de la surface constituée par le film plastique.

En d'autres termes, l'invention consiste à renforcer un film plastique, tel que par exemple réalisé en polyéthylène haute densité (PEHD) ou en polypropylène, au moyen de fils textiles spécifiques de type polyester, ces fils étant solidarisés en sens travers et/ou en sens progression sur ledit film plastique au moyen d'un fil de liage, également en polyester, assurant cette fonction de solidarisation par la définition de mailles venant emprisonner lesdits fils de renfort sur le film plastique. Ces mailles sont réalisées par tricotage, l'ensemble étant obtenu au moyen d'un métier à tricoter à insertion frontale de trame, tel que par exemple du type RACHEL.

Ainsi, de par la mise en oeuvre de fils textiles de renfort, il devient possible de travailler avec un film plastique léger de faible épaisseur, susceptible d'être facilement plié et déplié au gré de la nécessité de son utilisation pour le maraîcher et en fonction des exigences du climat.

Au surplus, la mise en oeuvre d'un fil de liage multibrins, assurant la solidarisation des fils techniques de renfort sur le film plastique, induit la traversée de part en part de l'épaisseur dudit film plastique lors de la réalisation du maillage, par les aiguilles du métier à tricoter, définissant un certain nombre d'orifices traversants au sein du film plastique, assurant à l'écran ainsi défini la mouillabilité requise pour assurer la perméabilité à l'eau ou à la vapeur d'eau en raison de l'effet mèche ou de la capillarité générée par les fils de liage ou par les fibres susceptibles de les constituer.

En raison du caractère perméable de l'écran ainsi réalisé à la vapeur d'eau, on s'affranchit des phénomènes de condensation susceptibles de se produire à l'intérieur de la serre, et risquant d'affecter la qualité de certaines cultures et la gestion du climat de la serre ainsi équipée.

En revanche, l'imperméabilité à l'air est conservée ; en effet, les fils de liage obturent les orifices réalisés par les aiguilles du métier à tricoter au sein du film plastique.

La technologie mise en oeuvre est celle dite de la maille jetée (par opposition à celle de la maille cueillie) réalisée notamment sur métier à tisser de type RACHEL, à insertion frontale de trame et selon une armature de type filet ou autre réalisable sur ces machines.

### BREVE DESCRIPTION DES DESSINS

La manière dont l'invention peut être réalisée et les avantages qui en découlent ressortiront mieux des exemples de réalisation qui suivent, donnés à titre indicatif et non limitatif à l'appui des figures annexées.
La figure 1 est une représentation schématique en section longitudinale illustrant la réalisation de l'écran conforme à l'invention.
La figure 2 est une représentation schématique en perspective du dessus de l'écran conforme à l'invention.
La figure 3 est une vue analogue à la figure 2 d'une autre forme de l'invention.
La figure 4 illustre un mode de réalisation de l'invention.
La figure 5 est une vue en section réalisée selon la ligne IV - IV de la figure 4.
La figure 6 est une vue plus précise d'un modèle d'écran selon une géométrie optimisée.

### MODE DE REALISATION DE L'INVENTION

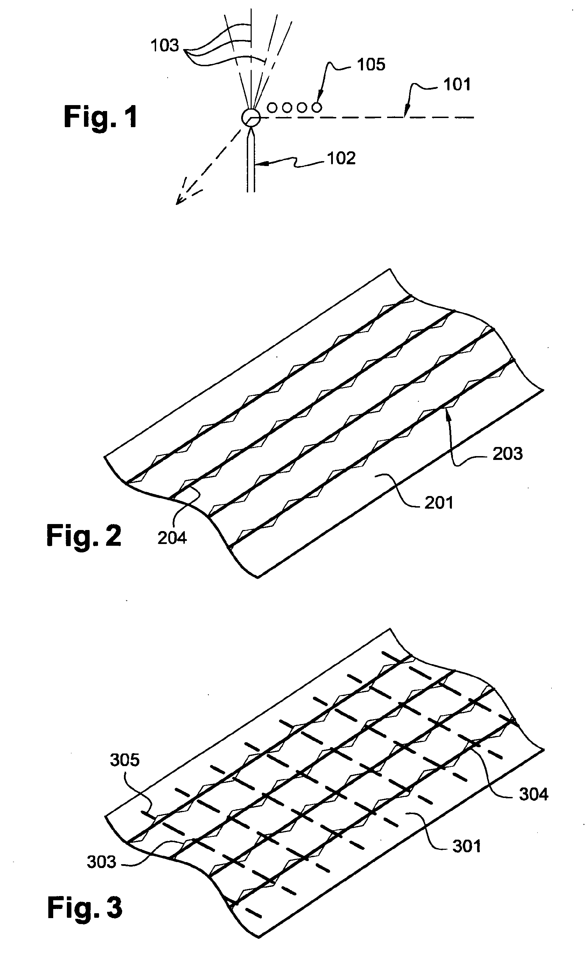

Les figures 2 et 3 illustrent l'écran d'isolation thermique conforme à l'invention selon deux formes de réalisation spécifiques. Ainsi, au sein de la figure 2, cet écran est fondamentalement constitué d'un film plastique **201,** réalisé en polyéthylène haute densité (PEHD) ou de polypropylène. Ce film présente une épaisseur typique de 40 à 100 micromètres.

Au sein de la figure 2, ce film comporte, orientés dans le sens production, des fils techniques de renfort **204,** disposés sensiblement de manière rectiligne. Ces fils techniques sont par exemple constitués de polyester. Ils sont solidarisés au film plastique **201** au moyen de fils de liage **203.** Ce fil de liage est multibrins, typiquement une à plusieurs dizaines de brins, et est mis en place par tricotage, de telle sorte à venir mailler autour des fils de renfort **204,** et venant ainsi traverser le film plastique.

Ce fil de liage multibrins est avantageusement réalisé en un matériau choisi dans le groupe comprenant le polyester, le polyester haute ténacité, le polyéthylène, le polypropylène, l'aramide, le para-aramide, bien connu sous la marque déposée Nomex®.

Ces différentes opérations sont réalisées en mettant en oeuvre un métier à tricoter à mailles jetées de type RACHEL à insertion frontale de trame, par exemple du type KARL MAYER ou LIBA.

On a schématiquement illustré sur la figure 1 le principe de réalisation de l'écran conforme à une forme voisine de réalisation de la figure 2, mais dans laquelle les fils de renforts **105** ne sont non pas orientés dans le sens production, mais dans le sens trame ou sens travers. Ainsi, au sein de cette figure 1, le film plastique **101** est introduit dans le métier à tricoter en question, puis est soumis à l'action des aiguilles de liage **102** assurant le tricotage des fils de liage **103** formant autant de mailles autour des fils de renfort orientés sens trame **105.**

Selon une caractéristique de l'invention, les fils de liage **103, 203, 303** qui traversent ainsi de manière plus ou moins périodique le film plastique **101, 201** et **301** aux fins de venir emprisonner les fils de renfort **105, 204, 304, 305,** font fonction de mèches, propres à assurer, notamment par phénomène de capillarité, le transfert de la vapeur d'eau le cas échéant accumulée à l'intérieur de la serre définie par l'écran, en direction de l'extérieur.

Dans le cadre du mode de réalisation illustré en figure 3, le film plastique **301** reçoit des fils de renfort orientés d'une part selon le sens production **304,** et d'autre part, orientés selon le sens travers **305.** Néanmoins, le mode de solidarisation de ces fils de renfort sur le film plastique est équivalent et même identique à celui précédemment décrit, c'est-à-dire, réalisé au moyen de fils de liage par tricotage sur un métier à mailles jetées à insertion frontale de trame de type RACHEL.

Bien évidement la densité de ces fils de renfort est très facilement réglable au moyen de la jauge du métier à mailles jetées, en fonction des besoins de l'utilisateur final et notamment des contraintes auxquelles va être soumis l'écran en question. Il convient en effet de rappeler qu'un tel écran a vocation principale à isoler thermiquement au des serres maraîchères ou horticoles. Un tel écran est donc appelé, en fonction du climat, à être plus ou moins souvent déployé ou au contraire replié, la multiplicité de ces opérations affectant à la longue sa résistance mécanique et en conséquence nécessitant une plus ou moins grande densité de fils de renfort.

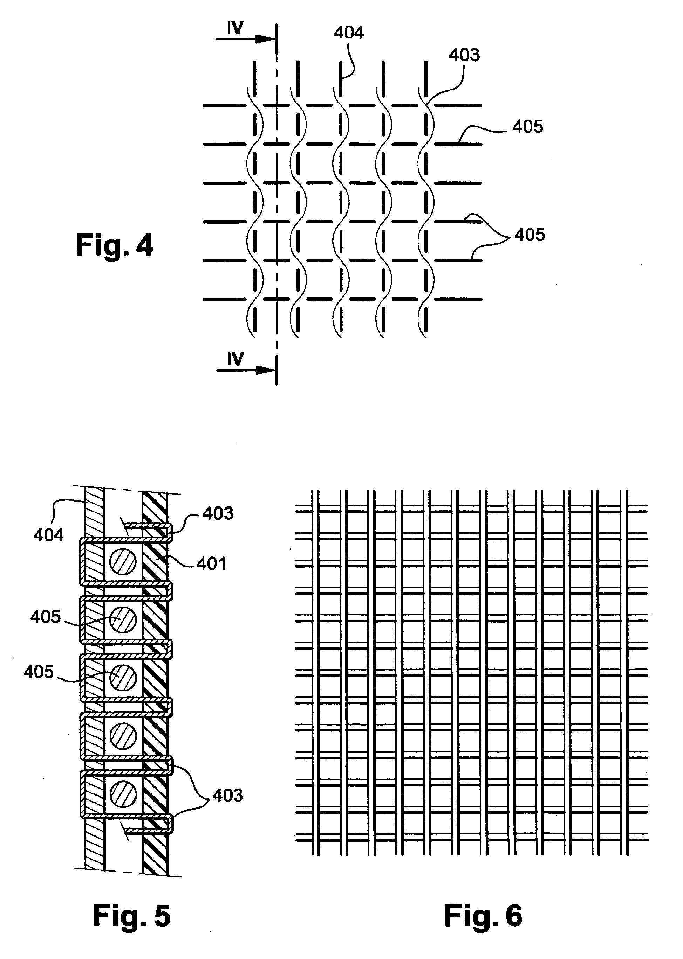

On observe de manière plus précise au sein de la figure 5, la structure de l'écran d'isolation conforme notamment aux figures 3 et 4. On peut notamment visualiser la traversée à plusieurs reprises du film plastique **401** par le fil de liage **403.**

On peut ainsi obtenir une structure du type de celle décrite en relation avec la figure 6, qui correspond à une géométrie optimisée avec un espacement des fils de renfort de 8 mm correspondant à une jauge précise du type de métier utilisé pour cette fabrication.

Selon l'invention, le film plastique peut être de différente nature en fonction des fonctions qu'on souhaite lui conférer.

Il peut notamment être transparent, ce qui constitue les applications principales d'un tel écran.

Cependant, il peut être occultant et dans ce cas là être noir. Les fils de renfort et de liage sont alors éventuellement de couleur noire également

Il peut être bicouche pour assurer par exemple au niveau de sa face extérieure une réflexion du soleil, et être occultant sur sa face intérieure. D'autres combinaisons de double fonction peuvent être imaginées pour certaines cultures, lorsque l'on recherche à la fois un ombrage intense, voire la nuit artificielle à l'intérieur de la serre, et simultanément une possibilité d'abaissement de température durant la journée.

De tels films bicouches sont par exemple obtenus par coextrusion, et les matériaux mis en oeuvre sont fonction des tâches dévolues à l'écran, et notamment occultation, réflexion, transmission, voire filtration (UV, infrarouges).

Ce faisant, l'écran conforme à l'invention remplit les différentes fonctions qui lui sont dévolues.

Tout d'abord et en premier lieu, il permet d'assurer une étanchéité à l'air propre à ainsi permettre sa fonction première, à savoir la réduction des déperditions de chaleur.

En outre, il présente des propriétés intéressantes de perméabilité à l'eau, à la vapeur d'eau, et d'une manière générale à l'humidité, en raison de la présence des fils de liage faisant fonction de mèche.

Au surplus, ces écrans sont susceptibles de présenter des caractéristiques de résistance mécanique élevée, en fonction de la densité des fils de renfort, ce que les écrans de l'art antérieur ne permettaient pas d'obtenir en tout cas de manière simple et peu coûteuse.

Ainsi, les fils de renfort peuvent avantageusement être espacés de 0,5 à 5 cm, de préférence 0,875 à 1,7cm. Ils sont avantageusement choisis dans le groupe comprenant les polyesters, polyester haute densité, Nomex®, aramide, polyéthylène ou polypropylène de titre 300 à 2200 dtex, et de préférence 500 à 1100 dtex.

Les fils de liage sont sélectionnés pour leur capacité de transport d'humidité. Ils sont constitués d'un polyester, voire même être réalisés en fibre naturelle ou d'origine végétale comme le coton ou le PVA. Ces fils de liage présentent un titre de l'ordre de 167 dtex, mais qui peut cependant varier de 50 à 1670 dtex.

Selon une variante non représentée, le film plastique peut également recevoir des bandes orientées sens chaîne ou sens trame, de caractéristiques identiques ou différentes en fonction du résultat recherché. Ces bandes sont solidarisées au film par les fils de liage précités, qui viennent donc transpercer les bandes selon la technique décrite ci-dessus pour les films continues.

Ainsi, ces bandes peuvent présenter une largeur par exemple comprise entre 1 et 500 mm, munies de propriétés spécifiques de transparence, de réflexion, de filtration, permettant ainsi de moduler à loisir les caractéristiques résultantes de l'écran ainsi constitué.

La mise en oeuvre d'un tel écran permet d'ouvrir la possibilité de choix en termes de matériaux, notamment sur les propriétés de sélectivité de la lumière et donc du film, sur son pouvoir de transmission lumineuse, sur sa faculté d'assurer une certaine sélectivité de transmission en fonction des différentes longueurs d'onde, qu'il s'agisse du domaine visible, de l'infrarouge ou de l'ultraviolet. Pour ce faire, on intègre dans le polymère de basse du film plastique des anti-oxydants, et ce, de manière connue.

## Revendications

1. Ecran d'isolation thermique constitué d'une structure textile intégrant un film réalisé en matière plastique (101, 201, 301, 401), ***caractérisé* en ce que** ledit film (101, 201, 301, 401) est renforcé au moyen de fils textiles de renfort (105, 204, 304, 305, 404, 405), solidarisés audit film au moyen d'un fil de liage multibrin (103, 203, 303, 403) venant mailler lesdits fils de renfort par tricotage de part et d'autre de la surface constituée par le film plastique.

2. Ecran d'isolation thermique selon la revendication 1, ***caractérisé* en ce que** les fils de renfort sont orientés selon le sens production et/ou selon le sens travers (ou trame).

3. Ecran d'isolation thermique selon l'une des revendications 1 et 2, ***caractérisé* en ce que** le fil de liage (103, 203, 303, 403) est réalisé en un matériau choisi dans le groupe comprenant le polyester, le polyester haute ténacité, le polyéthylène, le polypropylène, l'aramide, le para-aramide.

4. Ecran d'isolation thermique selon l'une des revendications 1 à 3, ***caractérisé* en ce que** le film plastique (101, 201, 301, 401) est réalisé en un matériau choisi dans le groupe comprenant le polyéthylène haute densité (PEHD) et le polypropylène.

5. Ecran d'isolation thermique selon la revendication 4, ***caractérisé* en ce que** le film plastique (101, 201, 301, 401) est un bicouche, dont les deux couches présentent des caractéristiques différentes en termes de réflexion, de transmission, et de filtration.

6. Ecran d'isolation thermique selon l'une des revendications 1 à 5, ***caractérisé* en ce que** les fils de renfort (105, 204, 304, 305, 404, 405) sont réalisés en un matériau choisi dans le groupe comprenant les polyesters, polyester haute densité, le para-aramide, l'aramide, le polyéthylène et le polypropylène.

7. Ecran d'isolation thermique selon l'une des revendications 1 à 6, ***caractérisé* en ce que** les fils de renfort (105, 204, 304, 305, 404, 405) sont espacés de 0,5 à 5 cm.

8. Ecran d'isolation thermique selon l'une des revendications 1 à 7, ***caractérisé* en ce que** le film plastique reçoit des bandes orientées sens chaîne ou sens trame, de caractéristiques identiques ou différentes en fonction du résultat recherché, lesdites bandes étant solidarisées au film plastique par les fils de liage.

9. Ecran d'isolation thermique selon la revendication 8, ***caractérisé* en ce que** les bandes présentent une largeur comprise entre 1 et 500 mm, munies de propriétés spécifiques de transparence, de réflexion, de filtration, permettant de moduler les caractéristiques résultantes de l'écran ainsi constitué.

10. Ecran d'isolation thermique selon l'une des revendications 1 à 9, ***caractérisé* en ce qu'**il est réalisé au moyen d'un métier à tricoter à mailles jetées et à insertion frontale de trame de type RACHEL, et **en ce que** le film plastique entrant dans sa constitution est percé d'orifices traversants résultant du travail des aiguilles dudit métier, propre à permettre le maillage du fil de liage.

11. Ecran d'isolation thermique selon l'une des revendications 1 à 10, ***caractérisé* en ce que** le fil de liage obture les orifices réalisés par les aiguilles du métier à tricoter, rendant ainsi le film plastique donc l'écran imperméable à l'air, mais perméable à la vapeur d'eau.

## Claims

1. Thermal insulation screen constituted by a textile structure with an integrated film made of a plastic material (101, 201, 301, 401), ***characterized* in that** said film (101, 201, 301, 401) is reinforced using reinforcing yarns (105, 204, 304, 305, 404, 405), secured to said film using a stranded binder yam (103, 203, 303, 403) that meshes said reinforcing yarns by knitting on either side of the surface formed by the plastic film.

2. Thermal insulation screen as claimed in claim 1, ***characterized* in that** the reinforcing yarns are oriented in the direction of production and/or in the cross (or weft) direction.

3. Thermal insulation screen as claimed in one of claims 1 and 2, ***characterized* in that** the binder yam (103, 203, 303, 403) is made of a material selected from the group comprising polyester, high tenacity polyester, polyethylene, polypropylene, aramid, para-aramid.

4. Thermal insulation screen as claimed in one of claims 1 to 3, ***characterized* in that** the plastic film (101, 201, 301, 401) is made of a material selected from the group comprising high density polyethylene (HDPE) and polypropylene.

5. Thermal insulation screen as claimed in claim 4, ***characterized* in that** the plastic film (101, 201, 301, 401) is a bi-layer, with the two layers thereof having different characteristics in terms of reflection, transmission, and filtration.

6. Thermal insulation screen as claimed in one of claims 1 to 5, ***characterized* in that** the reinforcing yarns (105, 204, 304, 404, 405) are made of a material selected from the group comprising polyesters, high density polyester, para-aramid, aramid, polyethylene and polypropylene.

7. Thermal insulation screen as claimed in one of claims 1 to 6, ***characterized* in that** the reinforcing yarns (105, 204, 304, 404, 405) are spaced out by between 0.5 and 5 cm.

8. Thermal insulation screen as claimed in one of claims 1 to 7, ***characterized* in that** the plastic film receives strips oriented in the warp direction or in the weft direction, with identical or different characteristics depending on the desired outcome, said strips being secured to the plastic film by the binder yarns.

9. Thermal insulation screen as claimed in claim 8 ***characterized* in that** the strips are between I and 500 mm wide, and are provided with specific transparency, reflection, and filtration properties so that the resulting characteristics of the screen so constituted can be adjusted.

10. Thermal insulation screen as claimed in one of claims 1 to 9, ***characterized* in that** it is made using a warp-knitting machine with frontal weft insertion of the RACHEL type, and **in that** its plastic film component is pierced with through orifices caused by the work of the needles of said machine, suitable for meshing the binder yam.

11. Thermal insulation screen as claimed in one of claims 1 to 10, ***characterized* in that** the binder yam seals the orifices made by the knitting machine needles, thereby rendering the plastic film and therefore the screen impermeable to air, but permeable to steam.

## Patentansprüche

1. Wärmeisolationsschirm, bestehend aus einer Textilstruktur, in die ein aus Kunststoff hergestellter Film (101, 201, 301, 401) integriert ist, **dadurch gekennzeichnet, dass** der Film (101, 201, 301, 401) mit Hilfe von Verstärkungs-Textilfäden (105, 204, 304, 305, 404, 405) verstärkt ist, die mit dem Film mit Hilfe eines Multifilament-Bindungsfadens (103, 203, 303, 403) fest verbunden sind, der die Verstärkungsfäden durch Stricken bzw. Wirken zu beiden Seiten der von dem Kunststofffilm gebildeten Fläche vermascht.

2. Wärmeisolationsschirm nach Anspruch 1, **dadurch gekennzeichnet, dass** die Verstärkungsfäden in der Produktionsrichtung und/oder in Querrichtung (oder Schuss) gerichtet sind.

3. Wärmeisolationsschirm nach einem der Ansprüche 1 und 2, **dadurch gekennzeichnet, dass** der Bindungsfaden (103, 203, 303, 403) aus einem Werkstoff hergestellt ist, der aus der Gruppe ausgewählt ist, die Polyester, Polyester hoher Zähigkeit, Polyethylen, Polypropylen, Aramid, Para-Aramid umfasst.

4. Wärmeisolationsschirm nach einem der Ansprüche 1 bis 3, **dadurch gekennzeichnet, dass** der Kunststofffilm (101, 201, 301,401) aus einem Werkstoff hergestellt ist, der aus der Gruppe ausgewählt ist, die Polyethylen hoher Dichte (PEHD) und Polypropylen umfasst.

5. Wärmeisolationsschirm nach Anspruch 4, **dadurch gekennzeichnet, dass** der Kunststofffilm (101, 201, 301, 401) ein Zweischichtmaterial ist, dessen beide Schichten hinsichtlich Reflexion, Übertragung und Filterung verschiedene Merkmale aufweisen.

6. Wärmeisolationsschirm nach einem der Ansprüche 1 bis 5, **dadurch gekennzeichnet, dass** die Verstärkungsfäden (105, 204, 304, 305, 404, 405) aus einem Werkstoff hergestellt sind, der aus der Gruppe ausgewählt ist, die die Polyester, Polyester hoher Dichte, Para-Aramid, Aramid, Polyethylen und Polypropylen umfasst.

7. Wärmeisolationsschirm nach einem der Ansprüche 1 bis 6, **dadurch gekennzeichnet, dass** die Verstärkungsfäden (105, 204, 304, 305, 404, 405) in Abständen von 0,5 bis 5 cm angeordnet sind.

8. Wärmeisolationsschirm nach einem der Ansprüche 1 bis 7, **dadurch gekennzeichnet, dass** der Kunststofffilm in Kettrichtung oder Schussrichtung gerichtete Bänder mit identischen oder verschiedenen Merkmalen in Abhängigkeit von dem gewünschten Ergebnis aufnimmt, wobei diese Bänder mit dem Kunststofffilm durch die Bindungsfäden fest verbunden sind.

9. Wärmeisolationsschirm nach Anspruch 8, **dadurch gekennzeichnet, dass** die Bänder eine Breite zwischen 1 und 500 mm aufweisen, mit spezifischen Eigenschaften der Transparenz, der Reflexion, der Filterung ausgestattet sind und eine Modulierung der Merkmale gestatten, die sich aus dem auf diese Weise ausgeführten Schirm ergeben.

10. Wärmeisolationsschirm nach einem der Ansprüche 1 bis 9, **dadurch gekennzeichnet, dass** er mit Hilfe einer Kettenwirkmaschine mit frontalem Schusseintrag vom Typ Rachel hergestellt ist und dass der bei seiner Herstellung verwendete Kunststofffilm mit durchgehenden Öffnungen versehen ist, die sich aus der Arbeit der Nadeln dieser Wirkmaschine ergeben, die die Vermaschung des Bindungsfadens gestattet.

11. Wärmeisolationsschirm nach einem der Ansprüche 1 bis 10, **dadurch gekennzeichnet, dass** der Bindungsfaden die durch die Nadeln der Wirkmaschine hergestellten Öffnungen verschließt, wobei er auf diese Weise den Kunststofffilm und damit den Schirm luftundurchlässig, aber durchlässig für Wasserdampf macht.
